# EUROPÄISCHE PATENTANMELDUNG

(11) **EP 4 707 971 A1**
(43) Veröffentlichungstag der Anmeldung: **11.03.2026**
(21) Anmeldenummer: 25186681.0
(22) Anmeldetag: 01.07.2025
(51) Int. Cl.: G05B 19/4093, B23Q 17/00, G05B 19/401

(54) **VERFAHREN UND VORRICHTUNG ZUM AUTONOMEN VERMESSEN EINES WERKZEUGS ODER EINES KOMPLETTWERKZEUGS**

(30) Priorität: 01.08.2024 DE 102024122026
(71) Anmelder: Franz Haimer Maschinenbau KG, 86568 Hollenbach-Igenhausen (DE)
(72) Erfinder: Stoffels, Olaf, 33415 Verl (DE); Duhme, Kai, 33689 Bielefeld (DE)
(74) Vertreter: Schwarz, Wolfgang

(57) **Zusammenfassung**

Die Erfindung betrifft ein Verfahren und eine Vorrichtung zum autonomen Vermessen eines Werkzeugs oder eines Komplettwerkzeugs aus einer Werkzeugaufnahme und einem in der Werkzeugaufnahme eingespannten Werkzeug.

Bei dem autonomen Vermessen wird zunächst autonom eine Art des Werkzeugs bestimmt wird, dann autonom abhängig von der Art des Werkzeugs ein das Werkzeug auszeichnender Punkt am Werkzeug bestimmt wird, ausgehend von diesem Punkt autonom Funktionsgeometrien des Werkzeugs vermessen und anschließend autonom aus den vermessenen Funktionsgeometrien eine Summengeometrie bei dem Werkzeug ermittelt wird.

## Beschreibung

Die Erfindung betrifft ein Verfahren und eine Vorrichtung zum autonomen Vermessen eines Werkzeugs oder eines Komplettwerkzeugs aus einer Werkzeugaufnahme und einem in der Werkzeugaufnahme eingespannten Werkzeug.

Es ist üblich, ein Komplettwerkzeug aus einer Werkzeugaufnahme und einem in der Werkzeugaufnahme eingespannten, beispielsweise eingeschrumpften, Werkzeug, beispielsweise einem einschrumpften Fräs- oder eingespannten Schneidwerkzeug, vor der Kopplung mit einer, beispielsweise als CNC-Bearbeitungsmaschine ausgebildeten, Werkzeugmaschine mittels einer Vorrichtung zum Vermessen eines Werkzeugs, kurz auch nur "Voreinstellgerät" genannt, zu vermessen ("Voreinstellung").

Die so mit dem Voreinstellgerät ermittelten (geometrischen) Maße des Werkzeugs bzw. Komplettwerkzeugs werden dann zur Optimierung der Werkstückbearbeitung in der Werkzeugmaschine der Werkzeugmaschine zur Verfügung gestellt bzw. dort verwendet.

Durch die Voreinstellung wird insbesondere sichergestellt, dass ein Werkstück bearbeitende Teile des Werkzeugs, wie beispielsweise eine Schneidkante eines Schneid-/Fräswerkzeugs, die für die geplante Bearbeitung des Werkstücks auf der Werkzeugmaschine akzeptablen Positionsmaße haben. Vereinfacht und allgemein ausgedrückt, es erfolgt eine Überprüfung und Inspektion von Werkzeugen auf Maßhaltigkeit aller relevanten Maße und Merkmalen.

Mittels eines solchen Voreinstellgeräts werden dabei insbesondere die Länge des Komplettwerkzeugs, der Durchmesser und/oder die Schneidenform des eingespannten Werkzeugs bzw. Schneid-/Fräswerkzeugs - und gegebenenfalls verschiedene weitere Abmessungen des bzw. bei dem Werkzeug bzw. Komplettwerkzeug gemessen.

Sind diese Daten unmittelbar für die Qualität der Werkstückbearbeitung des Werkstücks in der Werkzeugmaschine relevant, so hat die Werkzeugvermessung in dem Voreinstellgerät unter großer (Wiederhol-)Genauigkeit zu erfolgen.

Eine solche Vermessungseinrichtung bzw. ein solches Voreinstellgerät ist beispielsweise durch das Voreinstellgerät der Baureihe "UNO" oder der Baureihe "VIO" der Fa. Haimer bekannt.

Diese bekannte Vermessung von Komplettwerkzeugen, beispielsweise mittels der bekannten Voreinstellgeräte, erfolgt in der Regel automatisiert bzw. automatisch, um einen möglichst fehlerfreien und sicheren sowie rationellen und effektiven Prozess - beispielsweise im Rahmen automatischer industrieller Fertigungsprozesse - zur Verfügung zu stellen.

Allerdings bedeutet automatisch an dieser Stelle, dass zwar wesentliche Teilabläufe/-prozesse bei der Werkzeugvermessung ohne Einwirkung eines Bedieners ablaufen (können), wie beispielsweise bestimmte Vermessungsprozesse, aber ein völlig bedienerunabhängiger Prozess, d.h. ein autonomer Prozess, noch nicht realisiert ist. D.h., auch bei diesem automatischen Prozess bzw. bei dieser automatischen Werkzeugvermessung nach dem Stand der Technik sind Bedienerhandlungen, wie beispielsweise Eingaben von Werkzeugdaten und/oder Identifizierungsinformationen für das Werkzeug bzw. Komplettwerkzeug bis hin zur kompletten Programmierung eines Messablaufes in eine Vermessungssteuerung, erforderlich.

Dieses ist unter anderem auch darauf zurückzuführen, dass bei bekannten Werkzeugvermessungen dortige Teilprozessschritte höchst komplex und gegebenenfalls unzureichend strukturiert sind, was erwähnte Bedienerhandlungen/-eingaben erfordert, - und damit sich der Prozess als Ganzes nicht "autonomisierbar" erweist. D.h., ein vollständig autonomer Prozess kann im Stand der Technik nicht zur Verfügung gestellt werden.

Es ist Aufgabe der Erfindung, die im Stand der Technik bekannte Vermessung von Werkzeugen bzw. Komplettwerkzeugen insbesondere dahingehend zu verbessern, dass diese vollständig bedienerunabhängig bzw. bedienerfrei, d.h. autonom, durchführbar wird bzw. ist.

Diese Aufgabe wird gelöst durch ein Verfahren und eine Vorrichtung zum autonomen Vermessen eines Werkzeugs oder eines Komplettwerkzeugs aus einer Werkzeugaufnahme und einem in der Werkzeugaufnahme eingespannten Werkzeug - mit den Merkmalen des jeweiligen unabhängigen Anspruchs.

Vorteilhafte Weiterbildungen der Erfindung sind Gegenstand abhängiger Ansprüche sowie der nachfolgenden Beschreibung und beziehen sich sowohl auf die erfindungsgemäße Vorrichtung wie auch auf das erfindungsgemäße Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel-/Längs- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

"Autonom" bedeutet - in Abgrenzung zu "automatisiert" -, dass - abgesehen vom Auslösen eines Startsignales - kein Bedienereingriff bzw. keine Bedienerhandlung notwendig ist bzw. ein derartiger "autonomer Prozess" - unter Einsatz entsprechender Vorrichtungen - völlig selbständig (und bedienerfrei) ablaufen kann.

Im Folgenden soll - der Einfachheit halber - bei der Verwendung des Begriffes "Werkzeug" auch das "Komplettwerkzeug" aus einer Werkzeugaufnahme und einem in der Werkzeugaufnahme eingespannten Werkzeug mitgemeint sein.

Bei dem **Verfahren** zur autonomen Vermessung eines (kurz) Werkzeugs wird zunächst autonom eine Art des Werkzeugs bestimmt.

Als Art des Werkzeugs kann insbesondere ein Rotationswerkzeug und/oder ein spanabhebendes Werkzeug, beispielsweise ein Fräswerkzeug ggfl. mit Wendeplatten, ein Bohrwerkzeug, ein Drehwerkzeug ggfl. mit Schneidplatten oder eine Schleifscheibe, bestimmt werden.

Insbesondere ist hierbei auch zweckmäßig, wenn die Bestimmung der Art des Werkzeugs unter Verwendung K(ünstlicher)I(ntelligenz) basierter Bildverarbeitung erfolgt.

**Dann** wird autonom - abhängig von der Art des Werkzeugs - ein das Werkzeug auszeichnender Punkt am Werkzeug bestimmt.

Zweckmäßig ist es, wenn der Punkt - beispielsweise bei einem Bohrwerkzeug - ein oberster (bzw. höchster) Punkt des Werkzeugs ist oder der Punkt - beispielsweise bei einem Fräswerkzeug oder einer Schleifscheibe - ein Punkt auf einer Außenkante des Werkzeugs ist.

**Ausgehend** von diesem Punkt werden autonom Funktionsgeometrien des Werkzeugs vermessen.

Eine solche Funktionsgeometrie kann beispielsweise eine Schneide eines spanabhebenden Werkzeugs, wie ein Fräswerkzeug oder auch Bohrwerkzeug, oder ein Schleifscheibenkantenbereich bei einer Schleifscheibe sein.

Zweckmäßig ist es insbesondere, wenn das Werkzeug bei der Vermessung, insbesondere eingespannt in einer Spindel, um seine Längsachse bzw. Mittelachse gedreht bzw. rotiert wird, wobei bei Drehung bzw. Rotation autonom die Funktionsgeometrie (z.B. eine Schneide) erkannt und diese vermessen wird.

Dieser Vorgang aus Drehung/Rotation, Erkennung und Vermessung kann zumindest solange wiederholt durchgeführt werden, bis das Werkzeug eine vollständige Umdrehung um seine Längsachse bzw. Mittelachse vollzogen hat. Dann sind alle Funktionsgeometrien/Schneiden am Werkzeug erkannt (max. Anzahl) und alle Funktionsgeometrien/Schneiden vermessen worden.

Auch für diese Erkennung von der bzw. den Funktionsgeometrien kann K(ünstliche)I(ntelligenz) basierte Bildverarbeitung eingesetzt werden.

Vorteilhaft ist es weiter auch, wenn die vermessene Funktionsgeometrie/-en des Werkzeugs als Referenz hinterlegt und/oder gespeichert wird/werden, wobei insbesondere bei einer Wiedervermessung des Werkzeugs die neuvermessene Funktionsgeometrie/-en mit der Referenz verglichen wird bzw. werden (beispielsweise durch Bildvergleich).

Auch hier kann K(ünstliche)I(ntelligenz) basierte Bildverarbeitung zum Einsatz kommen.

Durch diesen Vergleich - von neuer Funktionsgeometrie und Referenz - kann insbesondere Verschleiß an einer Funktionsgeometrie und/oder eine defekte Funktionsgeometrie erkannt bzw. ermittelt werden.

**Anschließend** wird autonom aus den vermessenen Funktionsgeometrien eine Summengeometrie bei dem Werkzeug ermittelt.

Hier ist es insbesondere zweckmäßig, wenn die Summengeometrie - beispielsweise dargestellt über ein Summenbild - aus einer Überlagerung der vermessenen Funktionsgeometrien eines Werkzeugs ermittelt wird, wobei die Summengeometrie insbesondere ein Verlauf einer maximalen Außenkontur (insbesondere radial wie axial) bei dem Werkzeug bzw. Komplettwerkzeug ist.

Weiter kann es dann vorteilhaft sein, wenn - unter Verwendung der Summengeometrie des Werkzeugs **-,** insbesondere zusammen mit einer Minimalkontur des Werkzeugs, ein Rundlauf und/oder eine Planheit und/oder eine Rundheit bei dem Werkzeug ermittelt wird.

Unter einer solchen Minimalkontur können beispielsweise - im Vergleich zur Kontur der Summengeometrie - radial weiter innen (d.h. näher an der Mittel- bzw. Längsachse des Werkzeugs) liegende (, vermessene) Konturen bzw. Funktionsgeometrien, wie insbesondere radial weiter innenliegende Schneiden oder Schleifscheibenkantenbereiche, gemeint sein.

Auch ist es zweckmäßig, das Summenbild und/oder die Summengeometrie und/oder die Minimalkontur eines Werkzeugs als Referenz zu speichern, wobei auch hier dann insbesondere bei einer Wiedervermessung des Werkzeugs die dann entsprechend neu bestimmen Summenbilder und/oder Summengeometrien und/oder Minimalkonturen mit ihrer jeweiligen Referenz verglichen werden können (beispielsweise durch Bildvergleich).

Auch hier kann K(ünstliche)I(ntelligenz) basierte Bildverarbeitung zum Einsatz kommen.

Durch diesen Vergleich kann insbesondere dann auch Verschleiß am Werkzeug erkannt bzw. ermittelt werden.

Weiterhin ist es besonders vorteilhaft, wenn das Werkzeug abgescannt wird, wobei insbesondere ein 2D Scan und/oder ein 3D Scan durchgeführt - und ein entsprechendes digitales Abbild des Werkzeugs generiert - wird.

So kann hierdurch ein digitaler Zwilling - wie in der DE 10 2017 117 840 A1 beschrieben, welche hiermit mit ihrem Inhalt zum auch zum Gegenstand der Anmeldung gemacht wird ("incorporate by reference"), - und/oder ein kollisionsrelevanter bzw. zerspanungsrelevanter digitaler Zwilling - wie in der DE 10 2022 123 017 A1 beschrieben, welche hiermit mit ihrem Inhalt zum auch zum Gegenstand der Anmeldung gemacht wird ("incorporate by reference"), - des Werkzeugs ermittelt werden.

Zweckmäßig ist es dann auch, wenn die Vermessung/-en des Werkzeugs, wie deren Funktionsgeometrie/-en und der (kollisionsrelevanter/zerspanungsrelevanter) digitale Zwilling verglichen werden.

Dieser Vergleich kann insbesondere bezüglich bzw. in einer vorhandenen Werkzeug- oder Komplettwerkzeughöhe oder bezüglich bzw. in verschiedenen gegebenenfalls vorhandenen Werkzeug- oder Komplettwerkzeughöhen (2./3. Ebene usw.) durchgeführt werden.

Hierzu ist es auch zweckmäßig, das **Verfahren** nicht nur in einer (ersten) axialen Höhe/Ebene am Werkzeug durchzuführen. D.h., das **Verfahren** kann zweckmäßig auch in anderen axialen Höhen (z-Achse) (z.B. zweite/dritte Ebene usw.) an dem Werkzeug durchgeführt werden, beispielsweise dort, wo sich der Durchmesser eines Werkzeugs ändert (z.B. Stufen bei einem "Stufenbohrer") und/oder dort, wo andere bzw. zusätzliche Funktionsgeometrien, beispielsweise (weitere) Wende- /Schneidplatten an einem Werkzeug angeordnet sind, und/oder in einer (beliebig) anderen gegebenenfalls vorhandenen (axialen) Höhe.

Hier kann dann eine/die Vermessungseinheit autonom in z-Achsenrichtung/vertikal - beispielsweise an einer Außenkante des Werkzeuges entlang - bis in eine (weitere) Ebene verfahren, wo - von ihr - weitere Funktionsgeometrien erkannt werden - und wo sich das beschriebene Messprozedere wiederholt.

Weiterhin kann es zweckmäßig sein, wenn vermessene Oberflächenpunkte des Werkzeugs - insbesondere unter Verwendung K(ünstlicher) I(ntelligenz) basierter Bildverarbeitung - zu einer Kontur des Werkzeugs bzw. Komplettwerkzeugs verbunden werden.

Nach einer bevorzugten Ausführung ist vorgesehen, dass das **Verfahren** mit bzw. bei/an einem Rotationswerkzeug und/oder einem spanabhebenden Werkzeug, wie einem Fräswerkzeug, einem Bohrwerkzeug oder einer Schleifscheibe, durchgeführt wird.

Ferner kann - gemäß einer besonders bevorzugten Weiterbildung - das **Verfahren** einen oder mehrere der folgenden Schritte, bevorzugt in angegebener Reihenfolge, aufweisen:
So kann ein höchster Punkt des Werkzeugs (vgl. der das Werkzeug auszeichnende Punkt) auf einer Mittelachse (Längsachse) des Werkzeugs (z-Achse) bestimmt werden. D.h., es wird die Mittelachse (Längsachse) des Werkzeugs (z-Achse) angefahren; auf dieser wird dann der oberste bzw. höchste Punkt des Werkzeugs bestimmt.

Es kann (dann), insbesondere unter Verwendung des höchsten Punktes, geprüft werden, ob eine Spitze an dem Werkzeug vorhanden ist. Dazu können beispielsweise auch Mittel der K(ünstlichen) I(ntelligenz) bzw. Bildverarbeitung auf Basis von K(ünstlicher) I(ntelligenz) eingesetzt werden.

Auch kann dies beispielsweise derart ausgeführt werden, dass Nachbarpunkte des Werkzeugs zu dem höchsten Punkt gesucht/vermessen werden. Liegen diese - axial (in Mittelachsen/Längsachsen- bzw. z-Achsen-Richtung) - unterhalb dem höchsten Punkt, so kann eine Spitze (bei dem höchsten Punkt) angenommen werden.

Im Falle einer Spitze - kann (dann) als Art des Werkzeugs ein Bohrwerkzeug bestimmt werden.

Im Falle keiner Spitze - kann (dann) eine radial äußere Kante an dem Werkzeug (vgl. der das Werkzeug auszeichnende Punkt) bestimmt werden und es können (dann), insbesondere unter Verwendung der radial äußeren Kante, Schneiden (vgl. Funktionsgeometrie) an dem Werkzeug bestimmt werden. Dies kann insbesondere unter Verwendung von vorgegebenen Vergleichsmustern (mit ggfl. KI) erfolgen.

Die Schneiden können dann vermessen werden.

Werden Schneiden gefunden (und ggfl. Vermessen), so kann dann ferner auch von einem Fräswerkzeug bei dem Werkzeug ausgegangen werden. Fehlt es auch an solchen, könnte auch - bei dem Werkzeug - eine Schleifscheibe angenommen werden -, deren umlaufende Schleifscheibenkante (vgl. Funktionsgeometrie) vermessen werden kann.

Besonders vorteilhaft ist es insbesondere auch, wenn das **Verfahren** bzw. wenn das Werkzeug unter Verwendung der **Vorrichtung** zum autonomen Vermessen eines Werkzeugs oder eines Komplettwerkzeugs durchgeführt bzw. gemäß dem **Verfahren** bearbeitet wird.

Die **Vorrichtung** zum autonomen Vermessen eines Werkzeugs oder eines Komplettwerkzeugs aus einer Werkzeugaufnahme und einem in der Werkzeugaufnahme eingespannten Werkzeug sieht eine Vermessungseinheit und einer Rechen- und Steuereinheit vor.

Die Vermessungseinheit und/oder die Rechen- und Steuereinheit sind derart eingerichtet, dass zunächst autonom eine Art des Werkzeugs bestimmbar ist, dann autonom abhängig von der Art des Werkzeugs ein das Werkzeug auszeichnender Punkt am Werkzeug bestimmbar ist, ausgehend von diesem Punkt autonom Funktionsgeometrien des Werkzeugs vermessbar sind und anschließend autonom aus den vermessenen Funktionsgeometrien eine Summengeometrie bei dem Werkzeug ermittelbar ist.

Zweckmäßig ist es insbesondere, wenn die Vermessungseinheit und/oder die Rechen- und Steuereinheit eingerichtet ist zur Durchführung des **Verfahrens** oder erfindungsgemäßer Verfahrensschritte.

Dabei kann eine "...einheit", wie die Vermessungseinheit und die Rechen- und Steuereinheit, insbesondere auch einen Prozessor, eine Speichereinheit, eine Schnittstelle und/oder ein, insbesondere in der Speichereinheit gespeichertes, Betriebs-, Steuer- und Berechnungsprogramm aufweisen.

Gegebenenfalls kann die Vermessungseinheit und/oder die **Vorrichtung** eine Steuereinheit aufweisen, die für eine entsprechende Ansteuerung der Vermessungseinheit zur Durchführung eines der vorbeschriebenen erfindungsgemäßen **Verfahren** oder erfindungsgemäßer Verfahrensschritte sorgt.

Nach einer Ausgestaltung kann vorgesehen sein, dass die Vermessungseinheit eine oder mehrere optische und/oder berührungslos messende Messvorrichtungen aufweist, beispielsweise eine digitale Kamera und/oder ein Radar und/oder ein Lidar und/oder eine nach einem Durch- oder Auflichtverfahren arbeitende Messvorrichtung, insbesondere mit einem (digitalen) Bildsensor. Auch andersartige Messvorrichtungen können alternativ vorgesehen sein, wie beispielsweise ein Laservorhang - oder auch andere taktile oder optische Messsysteme.

Weiterhin kann es hier zweckmäßig sein, wenn - bei mehreren Messvorrichtungen - das Werkzeug oder das Komplettwerkzeug bzw. deren Funktionsgeometrie aus verschiedenen Perspektiven (Achsen) vermessen wird, insbesondere bei Drehwerkzeugen, wodurch insbesondere Stellungen von Funktionsgeometrien, wie beispielsweise von Schneiden oder Schneidplatten, bestimmt werden können.

Auch ist es vorteilhaft, wenn die Art der Messvorrichtung abhängig von einer Anforderung an eine Messgenauigkeit gewählt wird.

Ein **Bearbeitungszentrum** sieht die **Vorrichtung** sowie eine Werkzeugmaschine vor.

Zweckmäßig ist es hier insbesondere, wenn die **Vorrichtung** und die Werkzeugmaschine auf einem gemeinsamen Sockel montiert sind und/oder wenn die **Vorrichtung** in die Werkzeugmaschine (funktionell und/oder bauteilseitig) in die Werkzeugmaschine integriert ist.

Die Erfindung geht von der Erkenntnis aus, dass ein autonomes Vermessen eines Werkzeugs nur dann realisierbar wird bzw. ist, wenn - einerseits - jeder Prozess-/Verfahrensschritt für sich automatisierbar ist sowie alle Prozess- /Verfahrensschritte gemeinsam in einer integrierten Arbeitsumgebung, beispielsweise in einer einzigen Vorrichtung, wie ein Voreinstellgerät, durchführbar sind, - andererseits - zu Beginn jedes Prozess-/Verfahrensschritt jeweils jede für den jeweiligen Prozess-/Verfahrensschritt notwendige Information bereits vorhanden ist.

Ausgehend davon generiert die Erfindung ein bestimmtes, überraschend einfaches, erfindungsgemäßes bzw. erfinderisches Verfahrensregime mit speziell sortierter Abfolge von automatisierbaren bzw. automatisierten Prozess- /Verfahrensschritten, welches Verfahrensregime obige Voraussetzungen erfüllt bzw. gewährleistet.

Damit können bei dem erfindungsgemäßen bzw. erfinderischen Verfahrensregime Bedienerhandlungen unterbleiben, sind diese hier nicht notwendig, - und das sich aus dem erfindungsgemä-ßen bzw. erfinderischen Verfahrensregime ergebende autonome Verfahren zur Vermessung eines Werkzeugs wird - als Ganzes - völlig autonom durchführbar.

Dadurch kann die Erfindung dann einen fehlerfreien und sicheren sowie hoch rationellen und hoch effektiven Prozess - beispielsweise im Rahmen automatischer industrieller Fertigungsprozesse - zur Verfügung zu stellen. Die Erfindung liefert so einen wertvollen Beitrag zur intelligenten Vernetzung von Maschinen und Abläufen in der Industrie/industriellen Fertigung, d.h. zur Industrie 4.0.

Ein weiterer Aspekt der Erfindung betrifft eine Vorrichtung zum autonomen Vermessen eines Werkzeugs oder eines Komplettwerkzeugs, insbesondere die **Vorrichtung,** welche ein Lesegerät zum Lesen von Daten eines an einer Werkzeugaufnahme angeordneten Datenträgers an einem Messeinrichtungsträger der Vorrichtung vorsieht.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen - auch zwischen den Anordnungen/Vorrichtungen und Verfahren - zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein Voreinstellgerät, mittels welchem eine autonome Vermessung eines Werkzeugs durchführbar ist, gemäß einer erfindungsgemäßen Ausführung,
- FIG 2: ein Steuermenü bei dem Voreinstellgerät nach FIG 1, welches eine autonome Vermessung eines Werkzeugs verdeutlicht, gemäß einer erfindungsgemäßen Ausführung,
- FIG 3: einen Ausschnitt aus dem Steuermenü nach FIG 2 bei dem Voreinstellgerät nach FIG 1, welches eine autonome Vermessung eines Werkzeugs verdeutlicht, gemäß einer erfindungsgemäßen Ausführung,
- FIG 4: ein Summenbild (mit einer Summengeometrie und einer Minimalkontur) eines Fräswerkzeugs, welches/welche bei einer autonomen Vermessung eines Werkzeugs, gemäß einer erfindungsgemäßen Ausführung, generiert wird,
- FIG 5: einen Messeinrichtungsträger bei einem Voreinstellgerät mit integriertem Lesegerät, gemäß einer erfindungsgemäßen Ausführung.

### Autonome Vermessung eines Werkzeugs (FIGen 1 bis 4)

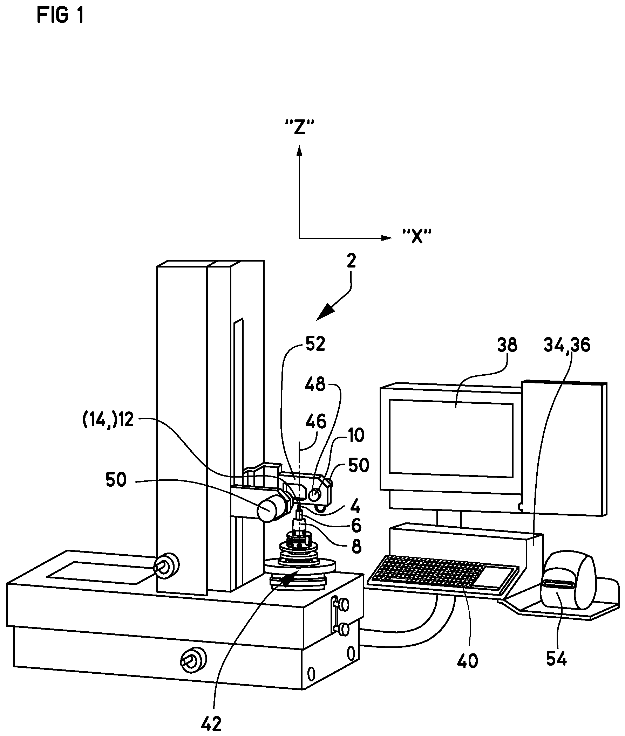

FIG 1 zeigt ein Werkzeugvoreinstellgerät 2 bzw. kurz Voreinstellgerät 2 - zum Vermessen eines Werkzeugs 4 bzw. Komplettwerkzeugs 6 (Werkzeugaufnahme 8 und Werkzeug 4) im Detail.

Das Voreinstellgerät 2 weist eine optische Messvorrichtung 10, in Form einer Kameravorrichtung 10, auf, mittels welcher von dem Werkzeug 4 bzw. Komplettwerkzeug 6 Informationen aufnehmbar sind - kurz und einfach gesagt, dieses vermessbar ist.

Zudem weist das Voreinstellgerät 2 eine Rechen- und Steuereinheit 34 auf, die u.A. einen Prozessor, eine Speichereinheit (kurz Speicher), eine Schnittstelle mit der Kameravorrichtung, eine Schnittstelle 36 mit einer Werkzeugmaschine und in der Speichereinheit gespeicherte, durch die Rechen- und Steuereinheit 34 ausführbare, über ein Anzeigemittel 38 und Eingabemittel 40 "bedienbare" Berechnungs- und Betriebsprogramme, wie die hier im Mittelpunkt stehende **autonome Vermessung eines Werkzeugs 4** (**"Maximum SE"**) - und weiter auch die Generierung der Daten für einen kollisionsrelevanten digitalen Zwilling und einen zerspanungsrelevanten digitalen Zwilling eines Werkzeugs 4 bzw. Komplettwerkzeugs 6, wie es in der DE 10 2022 123 017 A1 beschrieben ist, umfasst.

Die Rechen- und Steuereinheit 34 ist - mittels entsprechender Berechnungs- und Betriebsprogramme - darüber hinaus auch dazu vorgesehen, eine übliche Vermessung eines Werkzeugs 4 bzw. eines Komplettwerkzeugs 6 - unter Verwendung der Kameravorrichtung 10 - ablaufen zu lassen bzw. durchzuführen, wobei übliche Voreinstelldaten von dem Werkzeug 4 bzw. dem Komplettwerkzeug 6 generiert werden.

Des Weiteren ermöglicht die Rechen- und Steuereinheit 34 - ebenfalls mittels entsprechender Berechnungs- und Betriebsprogramme und unter Verwendung der Kameravorrichtung 10 -, Daten des Werkzeugs 4 bzw. des Komplettwerkzeugs 6 für eine Kollisionsprüfung zu generieren, nämlich den kollisionsrelevanten und den zerspanungsrelevanten digitalen Zwilling.

Die bzw. alle Vermessungs- bzw. Voreinstelldaten - inkl. der aus der **autonomen Vermessung eines Werkzeugs 4** (**"Maximum SE")** (zusammen kurz nur Vermessungs- bzw. Voreinstelldaten) - und/oder Daten des kollisionsrelevanten und des zerspanungsrelevanten digitalen Zwillings, kurz der kollisionsrelevante und der zerspanungsrelevante digitale Zwilling, können - in Form eines oder mehrerer Datensätze - in digitaler Form für eine maschinelle Weiterverarbeitung bereitgestellt werden, zum Beispiel in den Datenformaten VDA-FS, IFC, IGES, STEP, STL und DXF.

Im vorliegenden Fall werden getrennte Datensätze von Vermessungsdaten, Voreinstelldaten und den digitalen Zwillingen, wie auch ein gemeinsamer Datensatz der digitalen Zwillinge, bereitgestellt.

Über die Schnittstelle 36 mit der Werkzeugmaschine (nicht gezeigt) können die Daten bzw. die Datensätze an die Werkzeugmaschine übertragen/-mittelt werden (, wo mittels der Daten **u.A.** die simulierte Kollisionsprüfung durchführbar ist bzw. durchgeführt wird).

Das Voreinstellgerät 2 weist ferner, wie FIG 1 zeigt (vgl. auch FIGen 2 bis 4), das Anzeigemittel 38 in Form eines Monitors 38 (mit Funktionalität eines Touchscreens) und das Eingabemittel 40 auf, welches als (separate) Tastatur 40 ausgebildet ist. Darüber hinaus ist das Eingabemittel 40 auch als Touchscreen funktionaler Monitor 38 ausgebildet.

Über die Tastatur 40 und den Touchscreen 38 kann ein Bediener die Berechnungs- und Betriebsprogramme bedienen, wobei Funktionalitäten, Daten und Statusanzeigen der Berechnungs- und Betriebsprogramme am Monitor 38 angezeigt (und darüber auch bedienbar) werden, - und eine Weitergabe der Daten bzw. der Datensätze an die Werkzeugmaschine - über die Schnittstelle 36 - auslösen.

Wie FIG 1 auch zeigt, ist das Komplettwerkzeug 6 auf einer Spindel 42 angeordnet, welche - insbesondere auch von einem nicht näher dargestellten Aktuator automatisch - gesteuert mittels eines entsprechenden Funktionsprogramms - um eine Rotations-/Mittel- bzw. Längsachse 46 (z-Achse) drehbar ist.

Die erwähnte Kameravorrichtung 10 des Voreinstellgeräts 2 ist als ein Durchlichtsystem ausgebildet. Dabei liegen eine Kamera 48 und ein Beleuchtungsmittel 50 auf gegenüberliegenden Seiten eines auf der Spindel 42 angeordneten Komplettwerkzeugs 6. Die Kameravorrichtung 10 ist auf einem Schlitten 52 montiert - und ist entlang zweier Achsen ("x" und "z") manuell, wie insbesondere auch automatisch - gesteuert mittels eines entsprechenden Funktionsprogramms - verfahrbar.

Des Weiteren steht eine Schnittstelle für einen Drucker 54 zur Verfügung.

### Funktionsprogramm" autonome Werkzeugvermessung" ("Maximum SE")

FIGen 2 bis 4 verdeutlichen den Ablauf des Funktionsprogramms zur **autonomen Vermessung eines Werkzeugs bzw. Komplettwerkzeugs.**

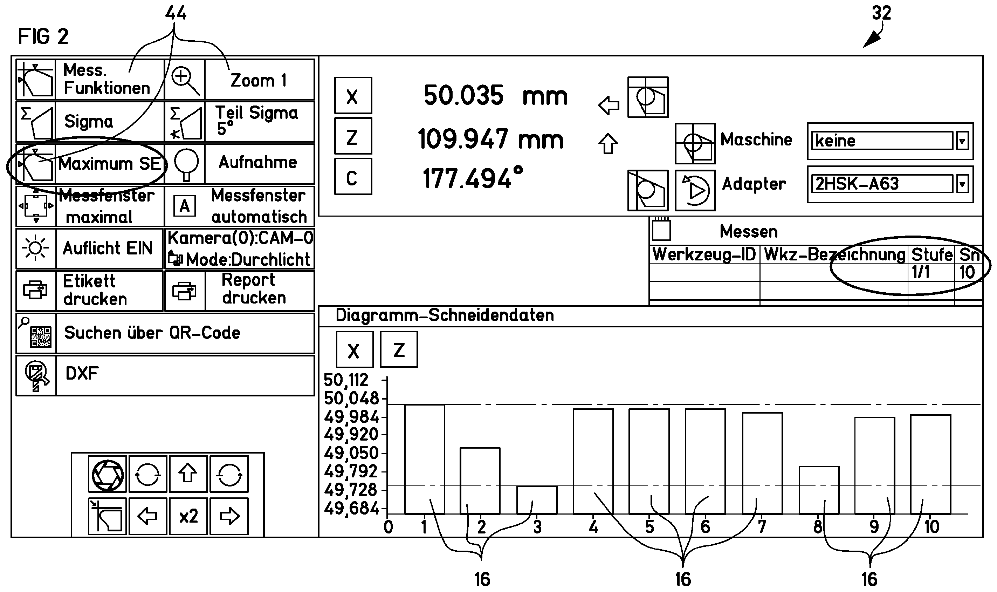

FIG 2 zeigt das Steuermenü bzw. Bedien- und Anzeigenoberfläche 32, wie es auf dem Anzeigemittel 38/Monitor/Touchscreen 38 des Voreinstellgeräts 2 angezeigt wird - und über welches/welchen die **autonome Vermessung eines Werkzeugs bzw. Komplettwerkzeugs** durchgeführt bzw. gestartet wird.

Dargestellt auf der linken Seite der Bedienoberfläche 32 sind verschiedene Funktionsprogramme des Voreinstellgeräts 2 - in Form von angeordneten Funktionsbutton 44, wie eben auch das Funktionsprogramm zur **autonomen Vermessung eines Werkzeugs bzw. Komplettwerkzeugs,** betitelt **"Maximum SE"** (vgl. Kennzeichnung durch Umrandung, Fig. 2).

Durch Berührung des Funktionsbuttons 44 "Maximum SE" wird die **autonome Vermessung eines Werkzeugs bzw. Komplettwerkzeugs** gestartet -, welche dann im Folgenden völlig bedienerfrei bzw. autonom abläuft. D.h., es kann ein beliebiges und zu diesem Zeitpunkt unbekanntes Werkzeug vermessen werden (und als neues Werkzeug in der Werkzeugverwaltung (als Datensatz) angelegt werden) - ohne weitere Bedienerassistenz.

Die Kameravorrichtung 10 "sucht" sich das in der Spindel 42 gespannte/gehaltene (beliebige und "unbekannte") Werkzeug 4.

D.h., die Kameravorrichtung 10 verfährt autonom solange entlang der Mittelachse 46 des Werkzeugs (z-Achse), bis sie (dort) "erste Teile/Bereiche" des Werkzeugs 4 erfasst/erkennt. Dabei verfährt sie autonom auf Höhe des höchsten Punktes 12 des in der Spindel 42 gespannten/gehaltenen Werkzeugs 4.

So kann dadurch ein höchster bzw. oberster Punkt 12 des Werkzeugs 4 auf der Mittelachse (Längsachse) 46 des Werkzeugs (z-Achse) bestimmt werden.

Unter Verwendung des höchsten Punktes 12 wird dann geprüft, ob eine Spitze 14 an dem Werkzeug 4 vorhanden ist. Dazu werden hier Mittel einer Bildverarbeitung auf Basis von K(ünstlicher) I(ntelligenz) eingesetzt.

Alternativ könnte dies auch derart realisiert werden, dass Nachbarpunkte zu dem höchsten Punkt 12 am Werkzeug 4 gesucht/vermessen werden. Liegen diese - axial (in Mittelachsen/Längsachsen- bzw. z-Achsen-Richtung) - unterhalb dem höchsten Punkt 12, so kann eine Spitze 14 (bei dem höchsten Punkt 12) angenommen werden.

Im Falle einer Spitze 14 - wird dann das - bislang "unbekannte" Werkzeug 4 - als Bohrwerkzeug bestimmt/klassifiziert. Die weitere Vermessung von Funktionsgeometrien 16 eines "Bohrwerkzeugs" (kurz auch nur "Bohrer") folgen.

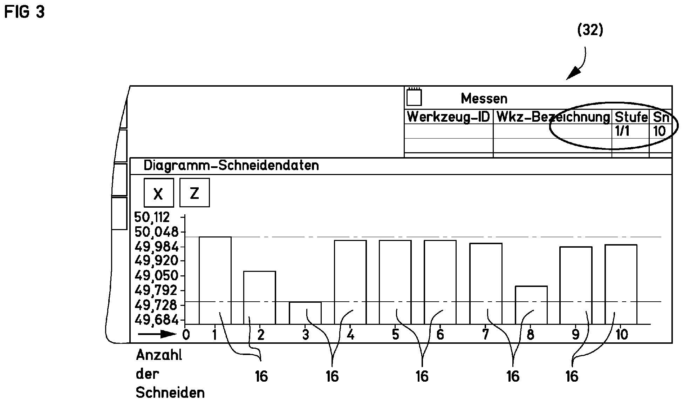

Da es sich aber - im vorliegenden Fall - bei dem "unbekannten" Werkzeug 4 um ein (zehnschneidiges) Fräswerkzeug handelt (vgl. FIG 3) wird keine Spitze 14 bei dem Werkzeug 4 gefunden werden - und dieses Werkzeug 4 so auch nicht als Bohrwerkzeug eingestuft/erkannt.

Im Falle dieser "keinen Spitze" bei dem Werkzeug 4 wird dann eine radial äußere Kante 18 an dem Werkzeug bestimmt. D.h., die Kameravorrichtung 10 verfährt radial nach außen (x-Achse) - an den radial äußeren Rand 20 des Werkzeugs 4.

Die Kameravorrichtung 10 erfasst den radial äußeren Rand 20 - und die Spindel 42 beginnt das in sie eingespannte Werkzeug 4 bzw. Komplettwerkzeug 6 (um ihre Längs-/Mittel- bzw. z-Achse 46) zu drehen.

Währenddessen das Werkzeug 4 rotiert, bestimmt die Kameravorrichtung 10 kontinuierlich die Kontur 22 des Werkzeugs 4 in der jeweiligen Drehposition. Die bestimmten Konturen 22 werden, hier unter Verwendung vorgegebener Vergleichsmuster, dahingegen ausgewertet, ob eine Schneide 16 (Funktionsgeometrie 16) des Werkzeugs 4 im Konturverlauf (der jeweiligen Drehposition des Werkzeugs 4) erkennbar ist. Wird eine Kontur 22 als Schneide 16/Funktionsgeometrie 16 erkannt, wird diese auch vermessen.

Das Werkzeug 4 wird komplett mindestens einmal um ihre Mittel- bzw. Längs- bzw. z-Achse 46 rotiert (360°), wobei so - am Ende des Rotationsvorgangs - alle (ggfl. bei einem Schneid- bzw. Fräswerkzeug vorhanden) Schneiden 16 (Funktionsgeometrien 16) erkannt - und dann in solchem Falle auch vermessen wurden.

Damit steht jetzt fest, ob es sich bei dem Werkzeug 4 (a) um ein Fräs- bzw. Schneidwerkzeug handelt - und (b) ein Wieviel-Schneider hierbei vorliegt.

Im vorliegenden, hier beschrieben Fall wurden Schneiden 16 (Funktionsgeometrien 16) - in der Anzahl zehn - erkannt und vermessen, wobei so das "unbekannte" Werkzeug jetzt als zehnschneidiges Fräswerkzeug identifiziert und entsprechend klassifiziert wurde.

FIG 2, im Detail davon FIG 3 zeigen die Vermessung der (in diesem Fall zehn) Schneiden 16 (Funktionsgeometrien 16) des - in diesem Fall - Fräswerkzeugs.

Wie die FIGen 2 und 3 (Ausschnitt der Bedienoberfläche/Touchscreen 38) erkennen lassen, sind - in diesem Fall - die "x"-Abmessungen, d.h. das Radialmaß, der zehn Schneiden 16 graphisch (in Balkenform (Höhe des Balkens entsprechend Radialmaß) dargestellt. Durch ein "Umschalten" auf das "z"-Maß, werden dann auch die jeweiligen "z"-Maße (z-Achse) der zehn Schneiden 16 entsprechend dargestellt. In einer Variante könnten x- und z-Maße auch gleichzeitig in überlagerter Form angezeigt werden.

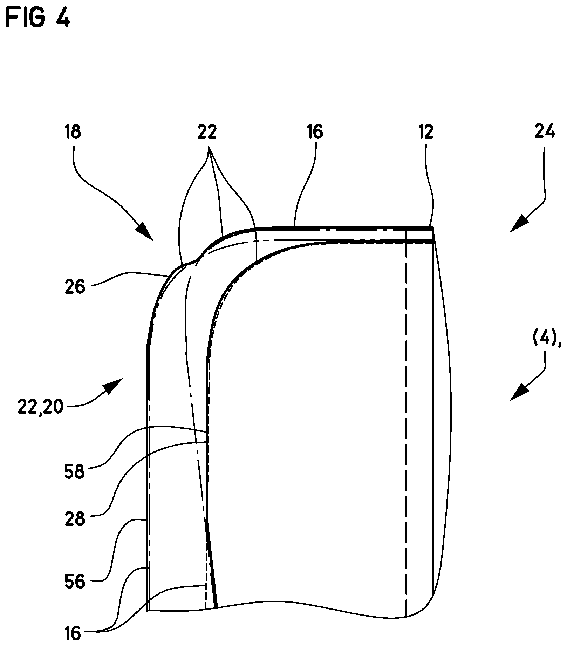

Die jeweiligen Darstellungen ermöglichen es, schnell und einfach Unterschiede in den Schneiden 16 bzw. deren Zustände erkennen zu können, z.B. die am weitesten außenliegende Schneide 56 (vgl. FIG 4) (FIGen 2 und 3 - Schneide 1) vs. die am weitesten innenliegende Schneide 58 (FIG 4) (FIGen 2 und 3 - Schneide 3) (vgl. FIG 2 bzw. FIG 3 - entsprechend durch die beiden Geraden markiert) bzw. die höchste Schneide vs. die niedrigste Schneide.

FIG 4 zeigt hierzu ein entsprechendes Summenbild 24, in welchem - unter Verwendung der vermessenen Schneiden 16 - deren Schneidenkonturverläufe zusammen überlagert dargestellt sind.

In dem Summenbild 24 sind, wie FIG 4 zeigt, die vermessenen Funktionsgeometrien/Schneiden 16 des Werkzeugs (in "x" und "z") überlagert dargestellt, wodurch sich so - im Bild (auch rechnerisch ermittelbar) - eine maximale Außenkontur 26, bezeichnet als Summengeometrie 26 - hier in "x" und "z" - bei dem Fräs-/Werkzeug 4 zeigt.

Ebenso lässt sich so eine Minimalkontur 28 - beispielsweise ebenfalls aus dem Summenbild 24 - entnehmen bzw. (auch rechnerisch) bestimmen, welche - vereinfacht und anschaulich ausgedrückt (als Pendant zur Summengeometrie 26) - eine "minimale Innenkontur" 28 bildet.

Aus maximaler Außenkontur 26 bzw. Summengeometrie 26 und minimaler Innenkontur 28 (in "x") lässt sich so dann auch ein Rundlauf, eine Planheit und eine Rundheit bei dem Werkzeug 4 ermitteln.

Sind die Schneiden 16 (Funktionsgeometrien 16) des Werkzeugs 4 vermessen, werden diese als Referenz (in einem Speicher bzw. Tool Management System) hinterlegt - und stehen so bei einer Wiedervermessung dieses Werkzeugs 4 als Vergleich für neuvermessene Schneiden 16/Funktionsgeometrien 16 dieses Werkzeugs 4 zur Verfügung.

Aus solch einem Vergleich lassen sich Verschleißinformationen für das Werkzeug 4 ermitteln. Aus den Verschleißinformationen lassen sich dann auch andere Eigenschaften wie z. B. eine Reststandzeit oder einen Reststandweg ableiten.

Sind bei der Konturerkennung (s. oben) keine einzelne/n Schneide/-en 16 erkannt worden, kann bei einem solchen Werkzeug 4 (auch keine Spitze 14 - s. oben) - eine Schleifscheibe 4 angenommen werden -, deren umlaufende Schleifscheibenkante 18 (vgl. Funktionsgeometrie 16) dann vermessen wird. Auch hier können dann Summenbild 24, Summengeometrie 26 und Minimalkontur 28 ermittelt, gespeichert und ausgewertet (z.B. Rundlauf, Planheit, ...) werden.

Wurde bei einem Werkzeug 4 eine Spitze 14 erkannt - und dieses so als Bohrer 4 klassifiziert, dann verfährt die Kameravorrichtung 10 axial in die Höhe, in welcher das Werkzeug/der Bohrer 4 bzw. dessen Bohrspitze seinen maximalen Außendurchmesser aufweist, - und dort radial nach außen - an den radial äußeren Rand 20 des Werkzeugs.

Ab hier erfolgt - bei einem Bohrwerkzeug 4 - das gleiche Prozedere, wie beschrieben, wie bei einem Fräswerkzeug 4.

Die Kameravorrichtung 10 erfasst den radial äußeren Rand 20 - und die Spindel 42 beginnt das in sie eingespannte Werkzeug/Bohrer 4 (um ihre Längs-/Mittel- bzw. z-Achse 46) zu drehen.

Währenddessen das Werkzeug/Bohrer 4 rotiert, bestimmt die Kameravorrichtung 10 kontinuierlich die Kontur 22 des Werkzeugs/Bohrers 4 in der jeweiligen Drehposition. Die bestimmten Konturen 22 werden dahingegen ausgewertet, ob eine Schneide 16 (Funktionsgeometrie 16) des Werkzeugs 4 im Konturverlauf (der jeweiligen Drehposition des Werkzeugs 4) erkennbar ist. Wird eine Kontur 22 als Schneide 16/Funktionsgeometrie 16 erkannt, wird diese auch vermessen.

Das Werkzeug/Bohrer 4 wird komplett um seine Mittel- bzw. Längs- bzw. z-Achse 46 rotiert (360°), wobei so - am Ende des Rotationsvorgangs - alle Schneiden 16 (Funktionsgeometrien 16) erkannt - und dann in solchem Falle auch vermessen wurden. Summenbild 24, Summengeometrie 26 und Minimalkontur 28 sowie Verschleißinformationen werden entsprechend ermittelt, gespeichert und ausgewertet.

Bei der hier beschriebenen **autonomen Vermessung eines Werkzeugs** erfolgt die Vermessung bei dem Werkzeug in "nur" einer (ersten Ebene - vgl. FIGen 2 und 3 "Stufe 1/1" - durch Umrandung gekennzeichnet), nämlich an der "äußeren Schneidkante" 18 (nahe der Spitze 14 des Werkzeugs 4).

Eine derartige Vermessung, wie beschrieben, kann auch in anderen axialen Höhen (z-Achse) (zweite/dritte Ebene u.s..) an dem Werkzeug 4 durchgeführt werden, beispielsweise dort, wo sich der Durchmesser des Werkzeugs 4 ändert (z.B. Stufen bei einem "Stufenbohrer") und/oder dort, wo andere bzw. zusätzliche Funktionsgeometrien 16, beispielsweise (weitere) Wende- /Schneidplatten (Funktionsgeometrien 16) an einem Werkzeug angeordnet sind, und/oder in einer (beliebig) anderen Höhe.

Hier verfährt dann die Kameravorrichtung 10 an der Außenkante des Werkzeuges 4 entlang bis - in einer weiteren Ebene - weitere Funktionsgeometrien 16 erkannt werden und wo sich das beschriebene Messprozedere (s. oben) wiederholt. Summenbild 24, Summengeometrie 26 und Minimalkontur 28 sowie Verschleißinformationen können auch hier wieder entsprechend ermittelt, gespeichert und ausgewertet werden.

### Funktionsprogramm "digitaler Zwilling"

Der Start des Funktionsprogramm "digitaler Zwilling" erfolgt entsprechend dem oben beschriebenen Funktionsprogramms "Maximum SE", wobei hier dann (nicht gezeigt) autonom oder durch Berührung des Funktionsbuttons "Digitaler Zwilling" auf dem Anzeigemittel 38/Monitor 38 die Generierung des (kollisionsrelevanten) digitalen Zwillings gestartet wird.

### - bei nicht rotierendem Werkzeug

Bei der Generierung des kollisionsrelevanten digitalen Zwillings eines Komplettwerkzeugs 6 - hier für ein nicht rotierendes Werkzeug 4, wie beispielsweise ein Drehwerkzeug 4, - wird dieses abgetastet - und dadurch ein digitales Abbild des Komplettwerkzeugs erstellt.

Die Abtastung erfolgt - in diesem Fall mit nicht rotierendem Werkzeug 4 - durch einen - durch die Kameravorrichtung 10 durchgeführten - 2D Scan des Komplettwerkzeugs 6, wobei eine beidseitige Kontur des Komplettwerkzeugs 6 - in einer vorgegebenen festen Position des Komplettwerkzeugs 6 (feststehende Spindel 42) vermessen wird.

Die Kameravorrichtung 10 fährt dabei automatisiert verschiedene Höhen des Komplettwerkzeugs 6 an und führt in diesen Höhen jeweils eine Aufnahme des Komplettwerkzeugs 6 bzw. eines Ausschnitts des Komplettwerkzeugs 6 durch, aus welchen Aufnahmen dann die Kontur bzw. der Konturverlauf des Komplettwerkzeugs 6 "extrahiert" wird, welcher dann das (zweidimensionale) digitale Abbild bildet.

Dieses geschieht in der Form, dass die Kameravorrichtung 10 schrittweise zunächst von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur der einen Seite des Komplettwerkzeugs 6 ausgerichtet wird - und hierbei die Kontur der einen Seite des Komplettwerkzeugs 6 ermittelbar ist.

Anschließend verfährt die Kameravorrichtung 10 schrittweise von oben nach unten, wobei hier die Kameravorrichtung 10 auf die Kontur der anderen Seite des Komplettwerkzeugs 6 ausgerichtet wird - und hierbei die Kontur der anderen Seite des Komplettwerkzeugs 6 ermittelbar ist.

Zusätzlich zur Abtastung des Komplettwerkzeugs wird weiter dann ein erster Schneidenpunkt, ein Schneidenanfangspunkt, und ein zweiter Schneidenpunkt, ein Schneidenendpunkt, bei dem Werkzeug 4 bzw. dem Komplettwerkzeug 6 mittels der Kameravorrichtung 10 vermessen.

Hierzu kann - wollte man dies nicht autonom durchführen - ein Bediener die Kameravorrichtung 10 in die beiden entsprechenden Höhen verfahren, welche er jeweils über eine Anzeige auf dem Monitor 38 kontrollieren kann, fokussiert dort den Schneidenanfangspunkt bzw. Schneidenendpunkt - und kann dann mittels der Tastatur 40 die jeweilige Vermessung auslösen. Ansonsten erfolgt dies autonom.

In dem digitalen Abbild wird dann unter Verwendung des vermessenen ersten und des vermessenen zweiten Schneidenpunktes bzw. unter Verwendung dieser ermittelter nächstliegender Punkte im digitalen Abbild ein Schneidenbereich ermittelt ("kollisionsrelevanter digitaler Zwilling").

### - bei rotierendem Werkzeug

Bei der Generierung des kollisionsrelevanten digitalen Zwillings eines Komplettwerkzeugs 6 - hier für ein rotierendes Werkzeug 4, wie beispielsweise ein Fräswerkzeug 4, - wird dieses ebenfalls abgetastet - und - in diesem Fall eines rotierenden Werkzeugs 4- ein (dreidimensionales) digitales Abbild des Komplettwerkzeugs 6 erstellt.

Die Abtastung erfolgt - in diesem Fall mit rotierendem Werkzeug 4 - durch einen - durch die Kameravorrichtung 10 durchgeführten - 3D Scan des Komplettwerkzeugs 6, wobei eine einseitige Kontur des Komplettwerkzeugs - bei unterschiedlich gedrehtem Komplettwerkzeug 6 (rotierende Spindel 42) vermessen wird.

Die Kameravorrichtung 10 fährt dabei automatisiert verschiedene Höhen des Komplettwerkzeugs 6 an - und führt in diesen Höhen jeweils Aufnahmen des Komplettwerkzeugs 6 bzw. von einem Ausschnitt des Komplettwerkzeugs 6 in unterschiedlich (mittels der Spindel 42) gedrehten KomplettwerkzeugPositionen durch, aus welchen Aufnahmen dann die Hüllkontur des Komplettwerkzeugs 6 "extrahiert" wird, welche dann das dreidimensionale digitale Abbild bildet.

Dieses geschieht in der Form, dass die Kameravorrichtung 10 schrittweise bevorzugt von unten, d.h. vom unteren Ende des Komplettwerkzeugs 6, nach oben, d.h. zum oberen Ende des Komplettwerkzeugs 6, verfahren wird, wobei die Kameravorrichtung 10 hier auf die Kontur einer Seite des Komplettwerkzeugs 6 gerichtet wird. In den angefahrenen Höhen werden jeweils verschiedene Aufnahmen des Komplettwerkzeugs 6 gemacht - in jeweils unterschiedlich gedrehten Komplettwerkzeugpositionen.

Zusätzlich zur Abtastung des Komplettwerkzeugs 6 wird weiter dann - ggfls. unter Verwendung K(ünstlicher) I(ntelligenz) - ein erster Schneidenpunkt, ein Schneidenanfangspunkt, und ein zweiter Schneidenpunkt, ein Schneidenendpunkt, bei dem Werkzeug 6 bzw. dem Komplettwerkzeug 6 mittels der Kameravorrichtung 10 erkannt und vermessen.

Hierzu kann - wollte man dies nicht autonom durchführen - ein Bediener die Kameravorrichtung 10 in die beiden entsprechenden Höhen verfahren, welche er jeweils über eine Anzeige auf dem Monitor 38 kontrollieren kann, fokussiert dort den Schneidenanfangspunkt bzw. Schneidenendpunkt - und kann dann mittels der Tastatur 40 die jeweilige Vermessung auslösen. Ansonsten erfolgt dies autonom.

In dem digitalen Abbild wird dann unter Verwendung des vermessenen ersten und des vermessenen zweiten Schneidenpunktes bzw. unter Verwendung dieser ermittelten nächstliegenden Punkte im digitalen Abbild ein Schneidenbereich ermittelt ("kollisionsrelevanter digitaler Zwilling") und als solcher gekennzeichnet.

Auf Basis dieser Daten führt die Werkzeugmaschine und/oder ein externer Programmierplatz dann die Kollisionssimulation durch.

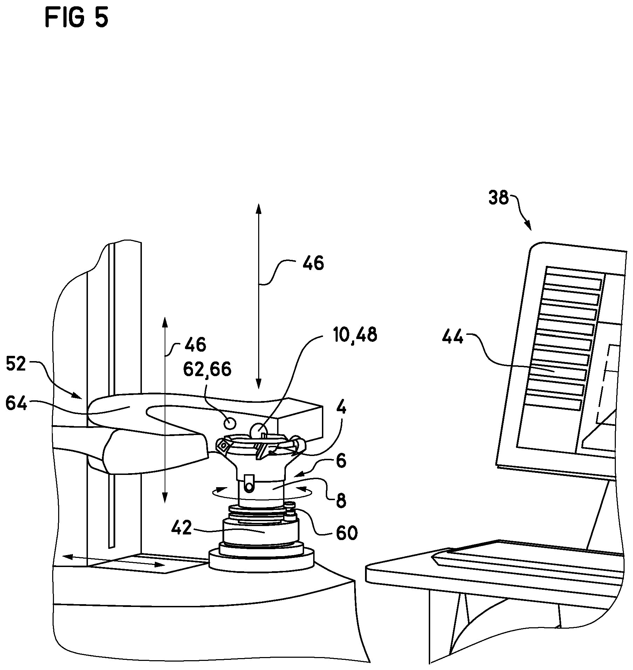

### (Messeinrichtungs-)Träger 64 mit Leseeinrichtung/-gerät 62 zum Auslesen eines Datenträgers 60 an der Werkzeugaufnahme 8 (FIG 5)

FIG 5 zeigt - als Teil des Schlittens 52 des Voreinstellgeräts 2 - einen (in etwa U-förmigen) Messeinrichtungsträger 64 bei dem Voreinstellgerät 2 mit einem dort integrierten Lesegerät/-einrichtung 62 zum Auslesen eines Datenträgers 60 an der Werkzeugaufnahme 8.

Das in der Spindel 42 gehaltene bzw. gespannte Komplettwerkzeug 6 - genauer die Werkzeugaufnahme 8 - sieht einen Datenträger 60, beispielsweise hier als ein berührungslos auslesbarer Datenträger, wie ein RFID-Chip, ausgebildet, vor, mittels welchem die Werkzeugaufnahme 8 vollautomatisch (auch im Rahmen vorgeschriebenen autonomen Abläufe) identifiziert und weitere Messdaten für diese erfasst werden können. Die Position des Datenträgers 60 an der Werkzeugaufnahme 8 ist in diesem Fall (HSK/SK-Werkzeugaufnahme) genormt.

Hierdurch werden falsche Zuordnungen oder fehlende Werkzeuge vermieden und ein maximaler Werkzeugeinsatz und eine hohe Maschinenverfügbarkeit gewährleistet. Dabei werden bzw. sind - mittels des Datenträgers 60 - alle werkzeugrelevanten Daten - hier berührungslos - auf dem Datenträger gespeichert, der mit der Werkzeugaufnahme 8 (beispielsweise wie in der DE 10 2016 102 692 A1 beschrieben) fest verbunden ist. Zusätzlich oder auch anstelle einzelner Werkzeugdaten kann auch ein das Werkzeug eindeutig identifizierender Code/Wert o.Ä. auf dem Chip gespeichert sein.

Wie FIG 5 auch zeigt, ist das Komplettwerkzeug 6 bzw. die Werkzeugaufnahme 8 auf der Spindel 42 angeordnet, welche - insbesondere auch von einem nicht näher dargestellten Aktuator automatisch um die Rotations-/Mittel- bzw. Längsachse 46 (z-Achse) drehbar ist.

Die erwähnte Kameravorrichtung 10 des Voreinstellgeräts 2 (vgl. FIG 1 Kamera 48 und Beleuchtungsmittel 50) ist auf dem U-förmigen Messeinrichtungsträger 64 angeordnet, welcher Teil des Schlittens 52 des Voreinstellgeräts 2 ist, - und welcher, wie in FIG 5 angedeutet, entlang zweier Achsen ("x" und "z" 46) manuell, wie insbesondere auch automatisch (vgl. autonomer Prozess - s. oben) verfahrbar ist.

Ferner ist in dem Messeinrichtungsträger 64, wie in FIG 5 angedeutet, ein Lesegerät 62 - mit einem (in Horizontalebene) verfahrbaren Lese-/Schreibkopf 66 - integriert, welches Daten aus dem Datenträger 60 an der Werkzeugaufnahme 8 auslesen kann.

Anschaulich ausgedrückt, der Lese-/Schreibkopf 66 des Lesegerätes 62 fährt aus dem Messeinrichtungsträger 64 heraus unmittelbar an den Datenträger heran (in dieser Position können die Daten aus dem Datenträger 60 ausgelesen werden) - und auch wieder zurück in den Messeinrichtungsträger.

Entweder autonom im Prozess integriert - oder als separater autonomer Prozess mittels eines Funktionsbuttons 44 am Touchscreen 38 (hier wird dann Berührung des Funktionsbuttons 44 der autonome Ausleseprozess gestartet) erfolgt das Auslesen von Daten aus dem Datenträger 60.

Der Messeinrichtungsträger 64 verfährt - entlang der Mittel- /z-Achse 46 - autonom in eine Grundposition, deren axiale Höhe der axialen Höhe entspricht, in welcher der Datenträger 60 an der Werkzeugaufnahme 8 befestigt ist.

Das Komplettwerkzeug 6 bzw. die Werkzeugaufnahme 8 wird - mittels der Spindel 42 - autonom solange um die z-Achse rotiert - bis der Datenchip 60, welcher in genormter Position an der Werkzeugaufnahme 8 angeordnet ist, vor dem Lesegerät 62 zu liegen kommt. Dabei ist der - Adapter abhängige - Winkelwert der Chipposition im System bekannt, kann aber gegebenenfalls Kamera unterstützt gesucht werden.

Ein Lese-/Schreibkopf 66 des Lesegeräts 62 verfährt bis unmittelbar an den Datenträger 60 heran - und liest dessen Daten aus. Danach verfährt der Lese-/Schreibkopf 66 wieder zurück.

Soll die Positionierung der Leseeinrichtung 62 vor dem Datenträger 60 (völlig) ohne Vorwissen (vgl. genormte Position) erfolgen, so kann vorgesehen sein, dass unter Verwendung K(ünstlicher)I(ntelligenz) basierter Bildverarbeitung die Kameraeinheit 10 den Datenträger 60 an der Werkzeugaufnahme 8 "sucht" und so dessen Position erkennt bzw. bestimmt. Höhenpositionierung des Messeinrichtungsträger 64 und Spindeldrehung sowie dann das Auslesen kann dann entsprechend erfolgen.

Ein derartiges Lesegerät 62 im Messeinrichtungsträger 64 eines Voreinstellgeräts 2 kann in entsprechender (auch funktionellen) Weise auch bei jeder anderen Werkzeugmaschine verwendet werden.

Auch könnte der Lese-/Schreibkopf 66 auch einfach eine spezielle Kamera sein, die am Messeinrichtungsträger 64 montiert ist, und die Werkzeugaufnahme 8 identifiziert - oder auch ein Lesegerät 62, welches eine Markierung, beispielsweise einen QR-Code, an der Werkzeugaufnahme 8 liest. Eine solche Markierung kann die Werkzeugaufnahme 8 dann identifizieren oder auch Werkzeugdaten codiert beinhalten.

Dieser hier im Zusammenhang mit FIG 5 beschriebene zusätzliche Aspekt bei einem Vorsteinstellgerät 2 ("(Messeinrichtungs-)Träger 52 mit Leseeinrichtung/-gerät 62 zum Auslesen eines Datenträgers 60 an der Werkzeugaufnahme 8 (FIG 5)") kann auch als separater Gegenstand einer Teilanmeldung - auch unabhängig vom Voreinstellgerät bzw. unabhängig in Bezug eines Voreinstellgerätes - weiterverfolgt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Vorrichtung zum Vermessen eines Werkzeugs oder eines Komplettwerkzeugs, Voreinstellgerät
- 4: (rotierendes/nicht rotierendes) Werkzeug, Fräswerkzeug, Schleifscheibe, Bohrwerkzeug/Bohrer
- 6: Komplettwerkzeug
- 8: Werkzeugaufnahme, (Hydrodehn-)Spannfutter
- 10: Vermessungseinheit, (optische) Messeinrichtung, Kameraeinheit

- 12: (oberster/höchster) Punkt
- 14: Spitze, Bohrspitze
- 16: Funktionsgeometrie
- 18: radial äußere Kante, Schneidkante, Schleifscheibenkante
- 20: radial äußeren Rand

- 22: Kontur
- 24: Summenbild
- 26: Summengeometrie, maximale Außenkontur
- 28: Minimalkontur, minimale Innenkontur

- 32: Bedien- und Anzeigenoberfläche
- 34: Rechen- und Steuereinheit
- 36: Schnittstelle mit der Werkzeugmaschine
- 38: Anzeigemittel, Monitor, Touchscreen
- 40: Eingabemittel, Tastatur

- 42: Spindel
- 44: Funktionsbutton
- 46: Mittel-/Längs-/Rotationsachse, z-Achse
- 48: Kamera
- 50: Beleuchtungsmittel
- 52: Schlitten
- 54: Drucker
- 56: am weitesten außenliegende Schneide 16
- 58: am weitesten innenliegende Schneide 16

- 60: Datenträger, RFID Chip
- 62: Leseeinrichtung/-gerät (für 60)
- 64: Messeinrichtungsträger (als Teil des Schlittens 52)
- 66: Lese-/Schreibkopf (von 62)

## Patentansprüche

1. **Verfahren** zum autonomen Vermessen eines Werkzeugs oder eines Komplettwerkzeugs aus einer Werkzeugaufnahme und einem in der Werkzeugaufnahme eingespannten Werkzeug, insbesondere unter Verwendung einer **Vorrichtung** zum autonomen Vermessen eines Werkzeugs oder Komplettwerkzeugs nach einem der Vorrichtungsansprüche,
**dadurch gekennzeichnet, dass**
zunächst autonom eine Art des Werkzeugs bestimmt wird, dann autonom abhängig von der Art des Werkzeugs ein das Werkzeug auszeichnender Punkt am Werkzeug bestimmt wird, ausgehend von diesem Punkt autonom Funktionsgeometrien des Werkzeugs vermessen und anschließend autonom aus den vermessenen Funktionsgeometrien eine Summengeometrie bei dem Werkzeug ermittelt wird.

2. **Verfahren** zum autonomen Vermessen eines Werkzeugs oder eines Komplettwerkzeugs nach einem der voranstehenden Verfahrensansprüche,
**dadurch gekennzeichnet, dass**
als Art des Werkzeugs oder Komplettwerkzeugs ein Fräswerkzeug ggfl. mit Wendeplatten, ein Bohrwerkzeug, ein Drehwerkzeug ggfl. mit Schneidplatten oder eine Schleifscheibe bestimmt wird und/oder dass die Funktionsgeometrie eine Schneide eines spanabhebenden Werkzeugs ist.

3. **Verfahren** zum autonomen Vermessen eines Werkzeugs oder eines Komplettwerkzeugs nach einem der voranstehenden Verfahrensansprüche,
**dadurch gekennzeichnet, dass**
die Bestimmung der Art des Werkzeugs unter Verwendung K(ünstlicher)I(ntelligenz) basierter Bildverarbeitung erfolgt.

4. **Verfahren** zum autonomen Vermessen eines Werkzeugs oder eines Komplettwerkzeugs nach einem der voranstehenden Verfahrensansprüche,
**dadurch gekennzeichnet, dass**
der Punkt bei einem Bohrwerkzeug ein oberster Punkt des Werkzeugs ist oder der Punkt bei einem Fräswerkzeug oder einer Schleifscheibe ein Punkt auf einer Außenkante des Werkzeugs ist.

5. **Verfahren** zum autonomen Vermessen eines Werkzeugs oder eines Komplettwerkzeugs nach einem der voranstehenden Verfahrensansprüche,
**dadurch gekennzeichnet, dass**
ein höchster Punkt des Werkzeugs oder Komplettwerkzeugs auf einer Mittelachse (Längsachse) des Werkzeugs oder des Komplettwerkzeugs (z-Achse) bestimmt wird und/oder dass, insbesondere unter Verwendung des höchsten Punktes, geprüft wird, ob eine Spitze an dem Werkzeug oder Komplettwerkzeug vorhanden ist, und/oder
dass im Falle einer Spitze als Art des Werkzeugs oder Komplettwerkzeugs ein Bohrwerkzeug bestimmt wird und/oder dass im Falle keiner Spitze eine radial äußere Kante an dem Werkzeug oder Komplettwerkzeug bestimmt wird und, insbesondere unter Verwendung der radial äußeren Kante, Schneiden an dem Werkzeug oder Komplettwerkzeug bestimmt werden, insbesondere unter Verwendung von vorgegebenen Vergleichsmustern, und/oder
dass die Schneiden vermessen werden.

6. **Verfahren** zum autonomen Vermessen eines Werkzeugs oder eines Komplettwerkzeugs nach einem der voranstehenden Verfahrensansprüche,
**dadurch gekennzeichnet, dass**
das Werkzeug oder das Komplettwerkzeug bei der Vermessung, insbesondere eingespannt in einer Spindel, insbesondere um seine Mittelachse (Längsachse), gedreht bzw. rotiert wird, wobei bei Drehung bzw. Rotation autonom die Funktionsgeometrie (z.B. eine Schneide) erkannt und diese vermessen wird und dieser Vorgang aus Drehung/Rotation, Erkennung und Vermessung insbesondere zumindest solange wiederholt durchgeführt wird, bis das Werkzeug oder das Komplettwerkzeug eine vollständige Umdrehung um seine Mittelachse (Längsachse) vollzogen hat (d.h., am Ende sind alle Funktionsgeometrien/Schneiden erkannt (max. Anzahl) und alle Funktionsgeometrien/Schneiden vermessen).

7. **Verfahren** zum autonomen Vermessen eines Werkzeugs oder eines Komplettwerkzeugs nach einem der voranstehenden Verfahrensansprüche,
**dadurch gekennzeichnet, dass**
die vermessene Funktionsgeometrie/-en des Werkzeugs oder Komplettwerkzeugs als Referenz hinterlegt und/oder gespeichert werden, wobei insbesondere bei einer Wiedervermessung des Werkzeugs bzw. des Komplettwerkzeugs die neuvermessene Funktionsgeometrie/-en mit der Referenz verglichen werden (Bildvergleich), insbesondere unter Verwendung von KI basierter Bildverarbeitung, wodurch Verschleiß an einer Funktionsgeometrie und/oder eine defekte Funktionsgeometrie ermittelbar ist.

8. **Verfahren** zum autonomen Vermessen eines Werkzeugs oder eines Komplettwerkzeugs nach einem der voranstehenden Verfahrensansprüche,
**dadurch gekennzeichnet, dass**
ein Summenbild aus einer Überlagerung der vermessenen Funktionsgeometrien eines Werkzeugs oder Komplettwerkzeugs ermittelt wird, wobei das Summenbild insbesondere ein Bild einer maximalen Außenkontur bei dem Werkzeug bzw. Komplettwerkzeug enthält.

9. **Verfahren** zum autonomen Vermessen eines Werkzeugs oder eines Komplettwerkzeugs nach einem der voranstehenden Verfahrensansprüche,
**dadurch gekennzeichnet, dass**
unter Verwendung der Summengeometrie des Werkzeugs oder des Komplettwerkzeugs insbesondere zusammen mit einer Minimalkontur des Werkzeugs bzw. Komplettwerkzeugs ein Rundlauf und/oder Planheit und/oder eine Rundheit bei dem Werkzeug bzw. Komplettwerkzeug ermittelt wird.

10. **Verfahren** zum autonomen Vermessen eines Werkzeugs oder eines Komplettwerkzeugs nach einem der voranstehenden Verfahrensansprüche,
**dadurch gekennzeichnet, dass**
das Werkzeug oder das Komplettwerkzeug abgescannt wird, wobei insbesondere ein 2D Scan und/oder ein 3D Scan durchgeführt wird, insbesondere unter Verwendung einer **Vorrichtung** zum autonomen Vermessen eines Werkzeugs oder Komplettwerkzeugs nach einem der Vorrichtungsansprüche, und dadurch ein digitaler Zwilling (wie in der DE 10 2017 117 840 A1 beschrieben) und/oder ein kollisionsrelevanter bzw. zerspanungsrelevanter digitaler Zwilling (wie in der DE 10 2022 123 017 A1 beschrieben) des Werkzeugs bzw. des Komplettwerkzeugs ermittelt werden/wird.

11. **Verfahren** zum autonomen Vermessen eines Werkzeugs oder eines Komplettwerkzeugs nach einem der voranstehenden Verfahrensansprüche,
**dadurch gekennzeichnet, dass**
die Vermessung und der (kollisionsrelevanter/zerspanungsrelevanter) digitale Zwilling verglichen werden, insbesondere bezüglich einer vorgebbaren Werkzeug- oder Komplettwerkzeughöhe oder bezüglich verschiedener vorgebbaren Werkzeug- oder Komplettwerkzeughöhen (2./3. Ebene).

12. **Verfahren** zum autonomen Vermessen eines Werkzeugs oder eines Komplettwerkzeugs nach einem der voranstehenden Verfahrensansprüche,
**dadurch gekennzeichnet, dass**
vermessene Oberflächenpunkte des Werkzeugs oder des Komplettwerkzeugs unter Verwendung KI basierter Bildverarbeitung zu einer Kontur des Werkzeugs bzw. Komplettwerkzeugs verbunden werden.

13. **Verfahren** zum autonomen Vermessen eines Werkzeugs oder eines Komplettwerkzeugs nach einem der voranstehenden Verfahrensansprüche,
**durchgeführt**
mit einem Rotationswerkzeug und/oder an einem spanabhebenden Werkzeug, insbesondere durchgeführt mit einem Schneid-/Fräswerkzeug und/oder mit einem in einer Werkzeugaufnahme eingespannten Schneid-/Fräswerkzeug oder mit einem Bohrwerkzeug und/oder mit einem in einer Werkzeugaufnahme eingespannten Bohrwerkzeug oder einer Schleifscheibe und/oder mit einer in einer Werkzeugaufnahme eingespannten Schleifscheibe.

14. **Verfahren** zum autonomen Vermessen eines Werkzeugs oder eines Komplettwerkzeugs nach einem der voranstehenden Verfahrensansprüche,
**dadurch gekennzeichnet, dass**
das Werkzeug oder das Komplettwerkzeug unter Verwendung der **Vorrichtung** zum autonomen Vermessen eines Werkzeugs oder eines Komplettwerkzeugs nach einem der Vorrichtungsansprüche vermessen wird.

15. **Vorrichtung** zum autonomen Vermessen eines Werkzeugs oder eines Komplettwerkzeugs aus einer Werkzeugaufnahme und einem in der Werkzeugaufnahme eingespannten Werkzeug mit einer Vermessungseinheit und einer Rechen- und Steuereinheit,
**dadurch gekennzeichnet, dass**
die Vermessungseinheit und die Rechen- und Steuereinheit derart eingerichtet sind, dass
- zunächst autonom eine Art des Werkzeugs bestimmbar ist, dann autonom abhängig von der Art des Werkzeugs ein das Werkzeug auszeichnender Punkt am Werkzeug bestimmbar ist, ausgehend von diesem Punkt autonom Funktionsgeometrien des Werkzeugs vermessbar sind und anschließend autonom aus den vermessenen Funktionsgeometrien eine Summengeometrie bei dem Werkzeug ermittelbar ist,
insbesondere, dass die Vermessungseinheit und die Rechen- und Steuereinheit derart eingerichtet ist zur Durchführung eines **Verfahrens** zum autonomen Vermessen eines Werkzeugs oder eines Komplettwerkzeugs aus einer Werkzeugaufnahme nach einem der Verfahrensansprüche.

16. **Vorrichtung** zum autonomen Vermessen eines Werkzeugs oder eines Komplettwerkzeugs nach einem der voranstehenden Vorrichtungsansprüche,
**dadurch gekennzeichnet, dass**
die Vermessungseinheit eine oder mehrere optische und/oder berührungslos messende Messvorrichtungen aufweist, beispielsweise eine digitale Kamera und/oder ein Radar und/oder ein Lidar und/oder ein nach einem Durch- oder Auflichtverfahren arbeitendes Messvorrichtung, insbesondere mit einem (digitalen) Bildsensor.

17. **Vorrichtung** zum autonomen Vermessen eines Werkzeugs oder eines Komplettwerkzeugs nach einem der voranstehenden Vorrichtungsansprüche,
**dadurch gekennzeichnet, dass**
bei mehreren Messvorrichtungen das Werkzeug oder das Komplettwerkzeug aus verschiedenen Perspektiven (Achsen) vermessen wird, wodurch insbesondere Stellungen von Funktionsgeometrien, wie beispielsweise von Schneiden, bestimmt werden können.

18. **Vorrichtung** zum autonomen Vermessen eines Werkzeugs oder eines Komplettwerkzeugs nach einem der voranstehenden Vorrichtungsansprüche,
**dadurch gekennzeichnet, dass**
die Art der Messvorrichtung abhängig von einer Anforderung an eine Messgenauigkeit gewählt wird.

19. **Vorrichtung** zum autonomen Vermessen eines Werkzeugs oder eines Komplettwerkzeugs aus einer Werkzeugaufnahme und einem in der Werkzeugaufnahme eingespannten Werkzeug, insbesondere nach einem der voranstehenden Vorrichtungsansprüche, **gekennzeichnet, durch**
ein Lesegerät zum Lesen von Daten eines an einer Werkzeugaufnahme angeordneten Datenträgers an einem Messeinrichtungsträger der Vorrichtung.

20. **Bearbeitungszentrum**
mit
einer **Vorrichtung** zum autonomen Vermessen eines Werkzeugs oder eines Komplettwerkzeugs nach einem der voranstehenden Vorrichtungsansprüche und einer Werkzeugmaschine, wobei insbesondere die **Vorrichtung** und die Werkzeugmaschine auf einem gemeinsamen Sockel montiert sind und/oder die **Vorrichtung** in die Werkzeugmaschine integriert ist.
